Europäisches Patentamt

European Patent Office

Office européen des brevets

(11) Veröffentlichungsnummer: **0 263 357 B1**

# (12) EUROPÄISCHE PATENTSCHRIFT

(45) Veröffentlichungstag der Patentschrift: **02.12.92**

(21) Anmeldenummer: **87113889.7**

(22) Anmeldetag: **23.09.87**

(51) Int. Cl.⁵: **H04B 7/08**

(54) **Verfahren und Schaltungsanordnung zum Empfang von Radiowellen.**

(30) Priorität: **09.10.86 DE 3634439**

(43) Veröffentlichungstag der Anmeldung:
**13.04.88 Patentblatt 88/15**

(45) Bekanntmachung des Hinweises auf die
Patenterteilung:
**02.12.92 Patentblatt 92/49**

(84) Benannte Vertragsstaaten:
**AT CH DE ES FR GB IT LI SE**

(56) Entgegenhaltungen:
**EP-A- 0 086 269**
**DE-A- 2 727 975**
**DE-A- 3 521 732**
**US-A- 2 923 813**

**IEEE TRANSACTIONS ON AEROSPACE AND ELECTRONIC SYSTEMS, Band AES-12, Nr. 5, September 1976, Seiten 616-627, IEEE, New York, US; R.T. COMPTON, Jr.: "Multiplier offset voltages in adaptive arrays"**

(73) Patentinhaber: **Blaupunkt-Werke GmbH Robert-Bosch-Strasse 200 W-3200 Hildesheim(DE)**

(72) Erfinder: **Bochmann, Harald, Dr.-Ing. Stöckener Strasse 125 W-3000 Hannover 21(DE)**

(74) Vertreter: **Eilers, Norbert, Dipl.-Phys. Blaupunkt-Werke GmbH Robert-Bosch-Strasse 200 W-3200 Hildesheim(DE)**

**Beschreibung**

Die Erfindung geht aus von einem Verfahren nach der Gattung des Hauptanspruchs.

Die erreichbare Qualität beim Empfang von UKW-Sendern in Fahrzeugen wird im wesentlichen durch Mehrwege-Empfang sowie durch von fremden Fahrzeugen ausgehende Zündstörungen negativ beeinflußt.

Da die Empfangsbedingungen in fahrenden Fahrzeugen ständig wechseln, erscheint der Einsatz mehrerer Richtantennen, wie z. B. in der DE-A 27 27 975 beschrieben, die auch eine Phasenkorrekturschaltung gemäß EP 86 269 A1 umfassen können, welche beim stationären Empfang im allgemeinen eine entscheidende Qualitätsverbesserung bewirkt, hier nicht ohne weiteres möglich. Vielmehr werden Antennen für Kraftfahrzeuge im Hinblick auf eine möglichst richtungsunabhängige Empfindlichkeit ausgelegt. Zur Verbesserung des Empfangs von UKW-Sendern ist z. B. aus der DE-A 35 21 732 ein Verfahren zum Empfang mit mehreren Antennen bekannt, bei welchem eine Auswahl aus den verfügbaren Antennensignalen erfolgt; wobei diese Auswahl nicht unbedingt mit der Optimierung des Störabstandes einhergeht.

Das erfindungsgemäße Verfahren mit den kennzeichnenden Merkmalen des Hauptanspruchs hat den Vorteil, daß als Optimierungskriterium die Minimierung eines überlagerten Störsignals verwendet wird. Durch das erfindungsgemäße Verähren wird die zeitliche Amplitudenschwankung des gestörten frequenzmodulierten Summensignals minimiert, so daß das zu demodulierende ZF-Signal eine zeitlich konstante Amplitude aufweist.

Durch die in den Unteransprüchen aufgeführten Maßnahmen sind vorteilhafte Weiterbildungen und Verbesserungen des im Hauptanspruch angegebenen Verfahrens sowie vorteilhafte Schaltungsanordnungen und Anordnungen zur Durchführung des Verfahrens möglich.

Besonders vorteilhaft ist, die Mischsignale jeweils um 90° in ihrer Phase zu drehen und die Mischsignale mit der ursprünglichen Phasenlage und mit der um 90° gedrehten Phasenlage jeweils mit getrennten Koeffizienten zu versehen.

Ein Ausführungsbeispiel der Erfindung ist in der Zeichnung an Hand mehrerer Figuren dargestellt und in der nachfolgenden Beschreibung näher erläutert. Es zeigt:

Fig. 1 ein Blockschaltbild einer erfindungsgemäßen Schaltungsanordnung,

Fig. 2 ein Blockschaltbild einer Regelschaltung, wie sie in der Schaltungsanordnung nach Fig. 1 verwendet wird,

Fig. 3 ein weiteres Blockschaltbild,

Fig. 4 die schematische Darstellung von Antennen, welche an einem Kraftfahrzeug angeordnet sind,

Fig. 5 die schematische Darstellung eines Beispiels für Empfangsverhältnisse,

Fig. 6 den Zeitverlauf eines ZF-Signals ohne Anwendung des erfindungsgemäßen Verfahrens,

Fig. 7 den Zeitablauf eines demodulierten Signals ohne die Anwendung des erfindungsgemäßen Verfahrens,

Fig. 8 den Zeitverlauf der ZF-Amplitude bei der Anwendung des erfindungsgemäßen Verfahrens,

Fig. 9 den Zeitverlauf des modulierten Signals ebenfalls bei der Anwendung des erfindungsgemäßen Verfahrens und

Fig. 10 Richtdiagramme zu ausgewählten Zeitpunkten eines Adaptionsvorganges.

Gleiche Teile sind in den Figuren mit gleichen Bezugszeichen versehen.

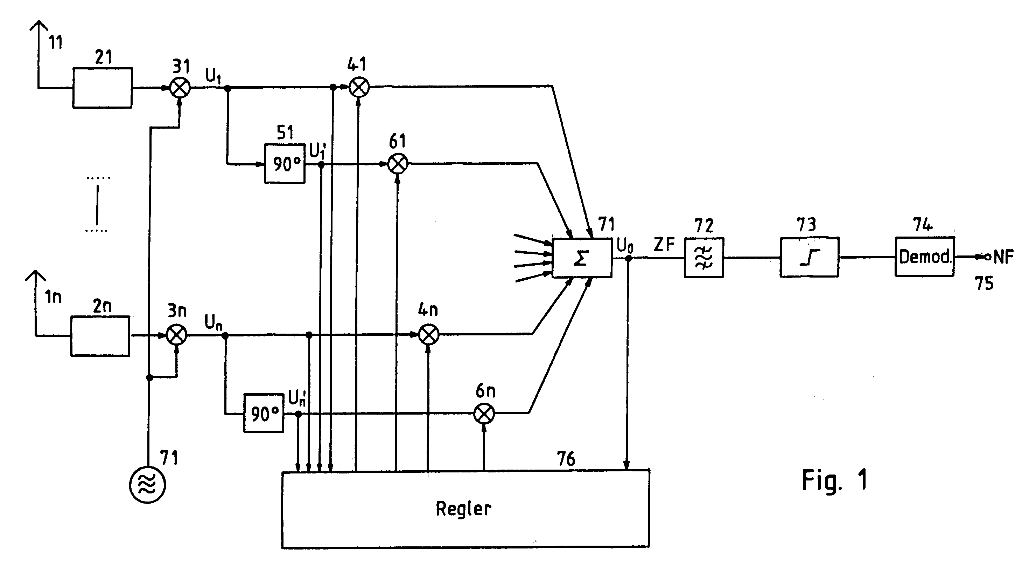

Bei der Schaltungsanordnung nach Fig. 1 sind mehrere Antennen 11 bis 1n vorgesehen, von denen lediglich die Antenne 11 und 1n dargestellt sind. Jeweils einer Antenne ist eine Vorstufe 21 bis 2n zugeordnet, deren Ausgangssignal je einem Mischer 31 bis 3n zugeführt ist. Mit jeweils einem weiteren Eingang der Mischer 31 bis 3n ist ein durchstimmbarer Oszillator 71 verbunden. Die somit entstandenen Mischsignale $u_1$ bis $u_n$ werden einerseits über Multiplizierer 41 bis 4n und andererseits über Phasendrehglieder 51 bis 5n und weitere Multiplizierer 61 bis 6n Eingängen einer Summierschaltung 70 zugeführt. Das am Ausgang der Summierschaltung 70 anstehende Summensignal wird in an sich bekannter Weise einem Zwischenfrequenzverstärker, der aus einem Filter 72 und einem Begrenzer 73 besteht, zugeführt, an den sich ein Demodulator 74 anschließt, an dessen Ausgang 75 die niederfrequenten Signale zur Verfügung stehen.

Mit Hilfe eines Reglers 76 werden den Multiplizierern 41 bis 4n und 61 bis 6n Koeffizienten zugeführt, mit denen die Mischsignale $u_1$ bis $u_n$ und die um 90° phasengedrehten Mischsignale $u_1'$ bis $u_n'$ bewertet werden, wobei die den Multiplizierern 41 bis 4n zugeführten Koeffizienten jeweils als Realteil und die den Multiplizierern 61 bis 6n zugeführten Koeffizienten jeweils als Imaginärteil eines komplexen Koeffizienten $w_i$ aufgefaßt werden können.

Ferner werden die Spannungen $u_i$ und die Spannung $U_i$ als komplexe Größen angenommen. Dabei gilt

$$u_i(t) = \hat{U}_i \bullet e^{j\xi(t)} \text{ mit } \hat{U}_i \in \mathbb{R}, \qquad (1)$$

EP 0 263 357 B1

sowie

$w_i = w_{Re\,i} + jw_{Im\,i}$ mit $w_{Re\,i}, w_{Im\,i} \in \mathbb{R}$.

Für die Summenspannung erhält man somit

$$u_0(t) = \sum_{i=1}^{n} \hat{U}_i \cdot e^{j\xi_i(t)} \cdot w_i = |u_0(t)| \cdot e^{j\xi_0(t)} \quad (2)$$

Als zu minimierender Fehler sei die quadratische Abweichung F der Einhüllenden $|u_0(t)|$ vom konstanten Pegel K definiert:

$$F = (|u_0(t)| - K)^2 \to Min \quad (3)$$

Bei Erreichen des Optimums muß dann gelten:

$$\left. \frac{\partial F}{\partial w_{Re\,i}} \right|_{w_{opt}} = 0 \quad ; \quad \left. \frac{\partial F}{\partial w_{Im\,i}} \right|_{w_{opt}} = 0 \quad i = 1...n \quad (4)$$

Diese Beziehung gilt sowohl fur deterministisch bestimmte Fehler, als auch für deren Erwartungswert bei überlagerten rauschähnlichen Schwankungen. Wählt man das Gradientenverfahren als Einstellstrategie für die Koeffizienten $w_i(t)$, so erhält man aus den Gleichungen (1) bis (4)

$$w_i(t) = \int_0^t \gamma \cdot \left[ K - |u_0(\tau)| \right] \cdot \left[ \frac{u_0(\tau)}{|u_0(\tau)|} \cdot u_i^*(\tau) \right] d\tau \,. \quad (5)$$

Dabei ist die Adaptionskonstante $\gamma$ maßgebend für die Stabilität und das dynamische Verhalten des Adaptionsalgorithmus.

Beendet ist der Einstellvorgang dann, wenn gilt:

$$K - |u_0(t)| \to 0 \,, \, t > t_n. \quad (6)$$

Betrachtet man in Gleichung (7) den Faktor

$$\frac{1}{|u_i(\tau)|}$$

als Bestandteil der Adaptionskonstanten $\gamma$ in Gleichung (5), so ändert sich gegenüber Gleichung (5) nur das dynamische Verhalten, nicht aber der stationäre Endwert.

Es gilt dann

3

$$w_i(t) = \int_0^t \tilde{\gamma} \cdot \left[K - |u_0(\tau)|\right] \cdot \left[\frac{u_0(\tau)}{|u_0(\tau)|} \cdot \left(\frac{u_i(\tau)}{|u_i(\tau)|}\right)^*\right] d\tau. \quad (7)$$

Der durch diese Modifikation erzielte Vorteil liegt in der einfachen Möglichkeit, die Adaption selektiv vorzunehmen, d. h. nur auf den Nutzsender bezogen, ohne einen hohen Filteraufwand zu benötigen. Die Ausdrücke

$$\frac{u_0(t)}{|u_0(t)|} \quad \text{bzw.} \quad \frac{u_i(t)}{|u_i(t)|}$$

lassen sich technisch mit Hilfe von Begrenzerverstärkern erzeugen. Das Produkt aus dem ersten und dem konjugiert komplexen Wert des zweiten entspricht dem unteren Seitenband des bei der Mischung entstehenden Frequenzspektrums. Abhängig ist dieses Produkt lediglich vom Phasenwinkel zwischen $u_0(t)$ und $u_i(t)$.

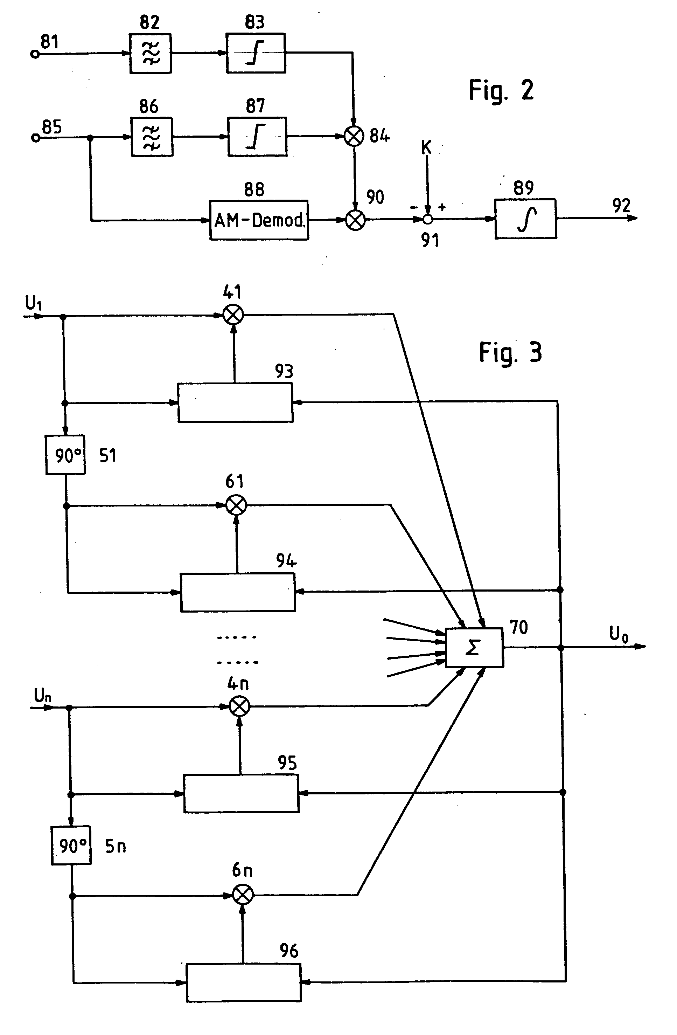

Die in Gleichung (7) dargestellte Funktion $w_i(t)$ läßt sich mit der Regelschaltung gemäß Fig. 2 realisieren. Dabei wird ein Eingang 81 mit einem der Mischsignale $u_i$ beaufschlagt, das über einen Bandpaß 82 und einen Amplitudenbegrenzer 83 einem ersten Multiplizierer 84 zugeführt wird. Ein zweiter Eingang 85 ist mit dem Ausgang der Summierschaltung 70 (Fig. 1) verbunden, von dem das Summensignal $u_0$ über einen zweiten Bandpaß 86 und einen zweiten Amplitudenbegrenzer 87 dem zweiten Eingang des ersten Multiplizierers 84 zugeführt wird.

Sind die Frequenzgänge der ZF-Filter 82, 86 identisch, so ist ihr Einfluß auf die Produktbildung für nutzfrequente Signalanteile auch bei nicht idealen ZF-Durchlaßkurven gering. Unerwunschte Frequenzanteile werden durch die Filter von den Begrenzern ferngehalten, so daß bei der Mischung ihrer Ausgangssignale auch keine störenden Kombinationsfrequenzen entstehen können. Zwar sind derartige Kombinationsfrequenzen im Ausgangssignal des mit dem Summensignal breitbandig angesteuerten Amplitudendemodulators 88 enthalten, sie leisten jedoch keinen Beitrag zur Regelinformation am Eingang des Integrators 89, da nur jeweils gleichfrequente Signalanteile an den Eingängen des zweiten Multiplizierers 90 zu einem Basisbandsignal führen.

Das Ausgangssignal des Multiplizierers 84 wird mit der vom Amplitudendemodulator 88 erzeugten Hüllkurve des Summensignals in einem zweiten Multiplizierer 90 multipliziert. Anschließend wird in einem Subtrahierer 91 die Differenz zu einer zugeführten Konstanten gebildet. Am Ausgang 92 des Integrators 89 steht dann der Koeffizient $w_i$ zur Verfügung. Jeweils eine in Fig. 2 dargestellte Regelschaltung ist für den Realteil des Koeffizienten $w_i$ und eine weitere für den Imaginärteil des Koeffizienten erforderlich. Bei n Antennen sind also 2n Regelschaltungen erforderlich.

Fig. 3 zeigt einen Teil der Schaltungsanordnung nach Fig. 1, bei welchem von dem in Fig. 1 dargestellten Regler 76 vier Regelschaltungen 93, 94, 95, 96 getrennt dargestellt sind.

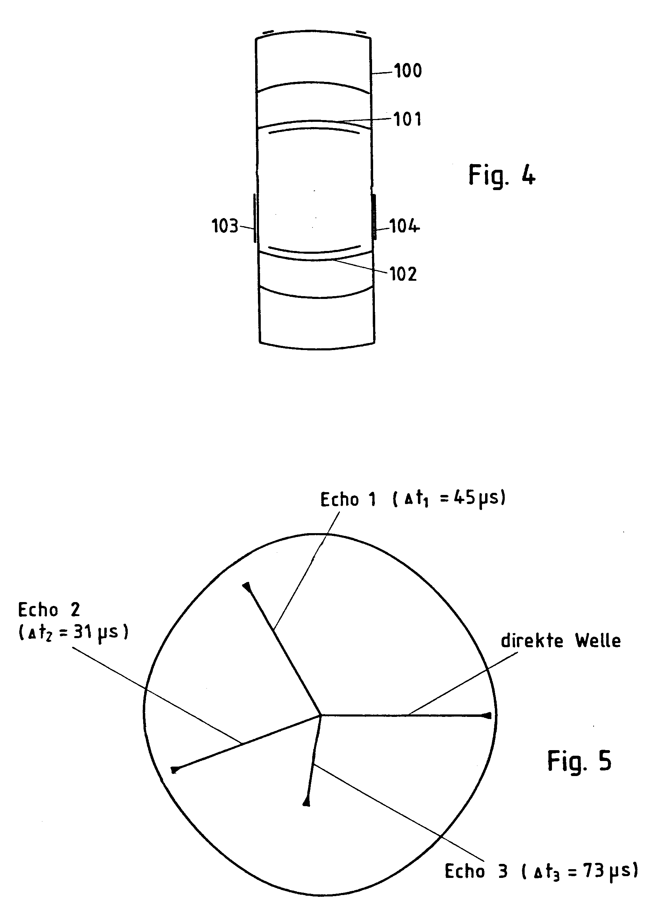

Fig. 4 zeigt als Beispiel für eine Anordnung der Antennen vier Scheibenantennen 101, 102, 103, 104, die an einem Kraftfahrzeug 100 angeordnet sind. Der Abstand der einzelnen Antennen sollte eine halbe Wellenlänge nicht wesentlich unterschreiten, was im UKW-Bereich einem Abstand von etwa 1,5 m entspricht. Diese Abstände lassen sich bei üblichen Personenkraftwagen etwa realisieren.

Im folgenden wird unter Bezugnahme auf die Figuren 5 bis 10 die Wirksamkeit des erfindungsgemäßen Verfahrens erläutert, wobei die dargestellten Ergebnisse durch eine Simulation erhalten wurden, bei der eine Trägerfrequenz von 100 MHz, eine Modulationsfrequenz von 2 kHz und ein Frequenzhub von ± 75 kHz gewählt wurden. Das zugrundeliegende Antennensystem besteht dabei aus vier Einzelantennen, die ähnlich zu der in Fig. 4 dargestellten Weise angeordnet sind, wobei der Abstand von jeweils zwei gegenüberliegenden Einzelantennen 1,5 m beträgt.

Fig. 5 stellt das resultierende Antennenrichtdiagramm vor Beginn eines Regel- bzw. Adaptionsvorganges mit bestimmten, willkürlich gewählten Einstell-Koeffizienten als Anfangswerten dar. Die ebenfalls gezeigten Geradenabschnitte kennzeichnen die Amplituden sowie die Einfallsrichtungen der direkten Welle bzw. der um die Zeiten $\Delta t_1$ bis $\Delta t_3$ verzögert eintreffenden Echos.

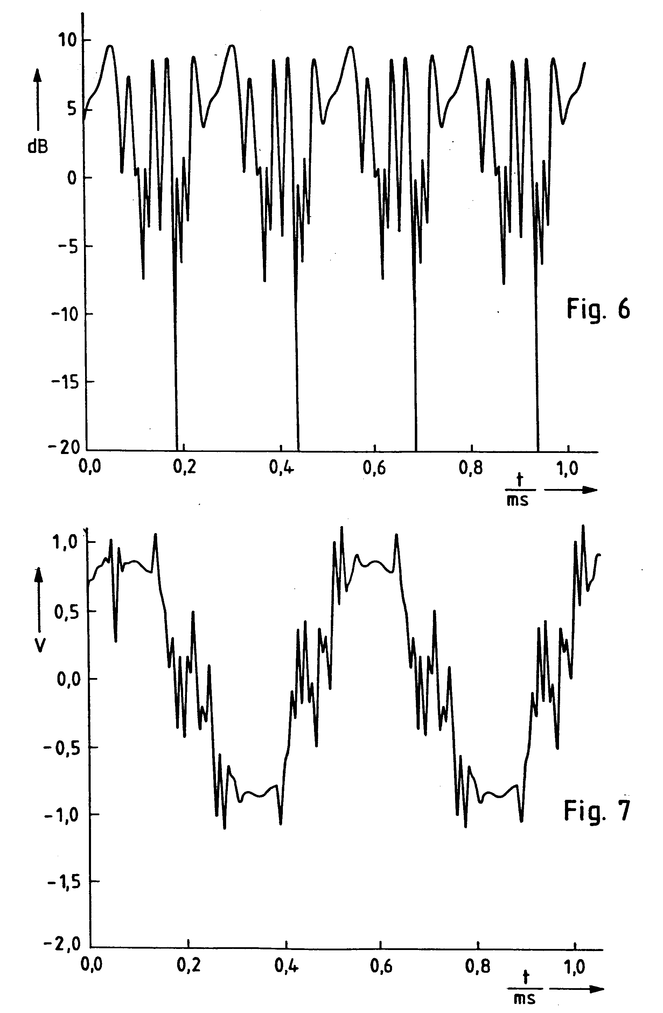

Fig. 6 zeigt den Zeitverlauf der Amplitude des Summensignals (ZF-Amplitude) wie er sich bei festgehaltenen Koeffizienten, d. h. ohne die Anwendung einer Regelung, ergibt. Das entsprechende NF-Signal am Ausgang 75 des Demodulators 74 (Fig. 1) ist in Fig. 7 dargestellt.

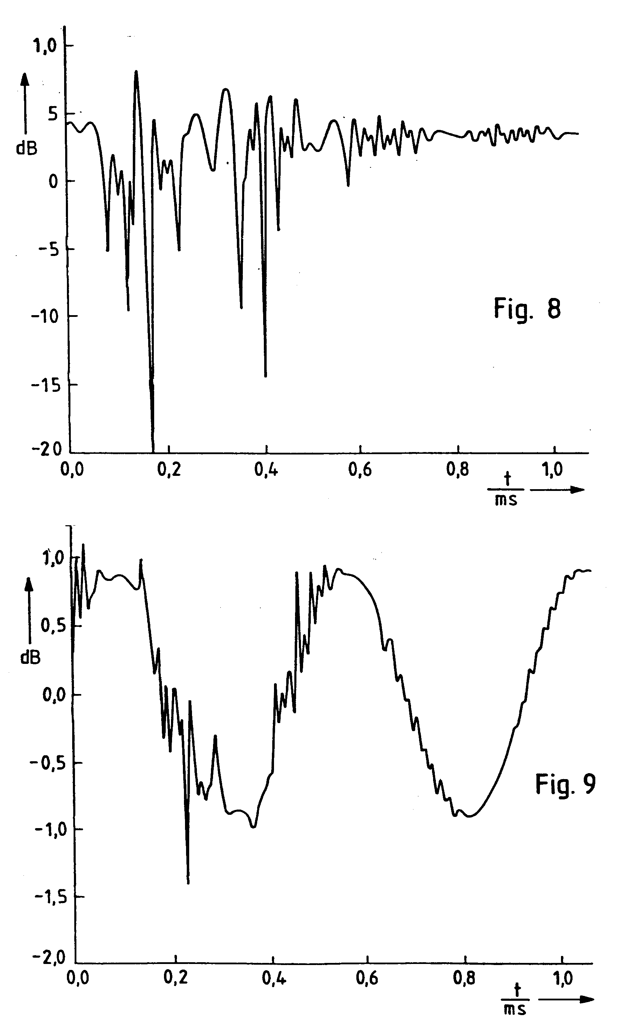

Fig. 8 zeigt den Verlauf der ZF-Amplitude nach dem Einsetzen der Regelung und Fig. 9 den Verlauf des entsprechenden NF-Signals am Ausgang 75. Den Figuren 8 und 9 ist leicht zu entnehmen, daß die Störungen bereits nach weniger als 1 ms bis auf einen geringen Rest abgeklungen sind. Infolge dieser kurzen Einstellzeit ist das erfindungsgemäße Verfahren ohne weiteres für mobilen Empfang geeignet.

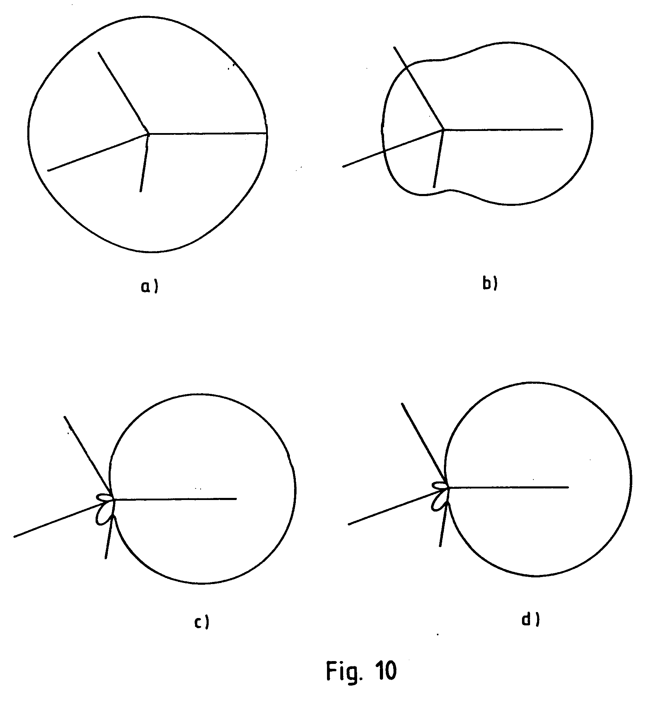

Fig. 10 zeigt resultierende Richtdiagramme des Antennensystems zu ausgewählten Zeitpunkten während eines Adaptionsvorganges. Dabei stellt das Diagramm a) einen Zustand vor der einsetzenden Adaption dar, während beim Diagramm d) die Adaption abgeschlossen ist.

**Patentansprüche**

1. Verfahren zum Empfang von UKW-Sendern mit mehreren Antennen für Fahrzeuge, wobei die von den einzelnen Antennen empfangenen Signale mit einem im Empfänger erzeugten Träger gemischt werden,

   dadurch gekennzeichnet,

   daß aus jedem Mischsignal ($u_1$ bis $u_n$) ein um 90 Grad phasenverschobenes Mischsignal ($u_1'$ bis $u_n'$) erzeugt wird,

   daß alle Mischsignale ($u_1$, $u_1'$ bis $u_n'$ $u_n'$) mit je einem zugeordneten Koeffizienten ($w_i$) bewertet werden und die bewerteten Mischsignale zu einem Summensignal ($U_0$) addiert werden,

   daß die zugeordneten Koeffizienten in Abhängigkeit vom Betrag des Summensignals und von der Phasenlage des Mischsignals zum Summensignal im Sinne einer Minimierung zeitlicher Schwankungen der Amplitude des Summensignals gebildet werden

   und daß zur Ableitung des Phasenwinkels zwischen den jeweiligen Mischsignalen und dem Summensignal die Mischsignale und das Summensignal in der Amplitude begrenzt werden.

2. Verfahren nach Anspruch 1,

   dadurch gekennzeichnet,

   daß zur Ableitung des Phasenwinkels zwischen dem Summensignal und dem jeweiligen Mischsignal das Summensignal und das jeweilige Mischsignal vor der Amplitudenbegrenzung bandbegrenzt werden.

3. Verfahren nach Anspruch 1 oder 2,

   dadurch gekennzeichnet,

   daß der Betrag des Summensignals durch Amplitudendemodulation gebildet wird.

4. Schaltungsanordnung zur Durchführung des Verfahrens nach einem der vorhergehenden Ansprüche,

   dadurch gekennzeichnet,

   daß ein durchstimmbarer Oszillator (71) und für je eine Antenne (11 bis 1n) ein Mischer (31 bis 3n) vorgesehen sind,

   daß die Ausgänge der Mischer (31 bis 3n) jeweils über einen ersten Multiplizierer (41 bis 4n) sowie über ein Phasendrehglied (51 bis 5n) und einen zweiten Multiplizierer (61 bis 6n) mit Eingängen einer Summierschaltung (70) verbunden sind,

   daß für jeweils ein Mischsignal mit der ursprünglichen Phasenlage und für jeweils ein um 90 Grad phasenverschobenes Mischsignal je eine Regelschaltung (93, 94, 95, 96) vorgesehen ist, deren Eingängen das Ausgangssignal der Summierschaltung (70) sowie das jeweilige Mischsignal zuführbar ist,

   daß in jeder Regelschaltung ein Amplitudenbegrenzer (83, 87) für das Summensignal und das Mischsignal vorgesehen sind,

   daß die Ausgänge der Amplitudenbegrenzer (83, 87) mit den Eingängen eines Multiplizierers (84) verbunden sind,

   daß ferner ein Amplitudendemodulator (88) vorgesehen ist, dem das Summensignal zuführbar ist und dessen Ausgang mit einem weiteren Multiplizierer (90) verbunden ist, dessen zweiter Eingang an den Ausgang des einen Multiplizierers (84) angeschlossen ist

   und daß der Ausgang des weiteren Multiplizierers (90) an den Eingang einer Integrationsschaltung (89) angeschlossen ist, deren Ausgang (92) auch den Ausgang der Regelschaltung bildet.

EP 0 263 357 B1

**5.** Schaltungsanordnung nach Anspruch 4,
dadurch gekennzeichnet,
daß vor jedem Amplitudenbegrenzer (83, 87) ein Bandpaß (82, 86) vorgesehen ist.

**6.** Schaltungsanordnung nach Anspruch 5,
dadurch gekennzeichnet,
daß der Amplitudendemodulator (88) und der Bandpaß (86) und der Amplitudenbegrenzer (87) für das Summensignal für mehrere Regelschaltungen gemeinsam vorgesehen sind.

**Claims**

**1.** Method of reception of VHF transmitters, having a plurality of antennas for vehicles, the signals received from the individual antennas being mixed with a carrier generated in the receiver, characterised in that a mixed signal ($u_{1'}$ to $u_{n'}$) which is phase-shifted through 90° is generated from each mixed signal ($u_1$ to $u_n$), in that all the mixed signals ($u_1$, $u_{1'}$ to $u_n$, $u_{n'}$) are weighted with in each case one associated coefficient ($w_i$) and the weighted mixed signals are added to form a sum signal ($U_0$), in that the associated coefficients are formed as a function of the magnitude of the sum signal and of the phase of the mixed signal to form the sum signal, in the sense of minimising time fluctuations in the amplitude of the sum signal, and in that the mixed signals and the sum signal are limited in amplitude, in order to derive the phase angle between the respective mixed signals and the sum signal.

**2.** Method according to Claim 1, characterised in that the sum signal and the respective mixed signal are band-limited before the amplitude limiting, in order to derive the phase angle between the sum signal and the respective mixed signal.

**3.** Method according to Claim 1 or 2, characterised in that the magnitude of the sum signal is formed by amplitude demodulation.

**4.** Circuit arrangement for carrying out the method according to one of the preceding claims, characterised in that a tuneable oscillator (71) and a mixer (31 to 3n) for in each case one antenna (11 to 1n) are provided, in that the outputs of the mixers (31 to 3n) are connected to inputs of a summing circuit (70) in each case via a first multiplier (41 to 4n) and via a phase rotating element (51 to 5n) and a second multiplier (61 to 6n), in that in each case one control circuit (93, 94, 95, 96) is provided for in each case one mixed signal at the original phase and for in each case one mixed signal which is phase-shifted through 90 degrees, to the inputs of which control circuit the output signal of the summing circuit (70) and the respective mixed signal can be supplied, in that an amplitude limiter (83, 87) for the sum signal and the mixed signal is provided in each control circuit, in that the outputs of the amplitude limiters (83, 87) are connected to the inputs of a multiplier (84), in that, furthermore, an amplitude demodulator (88) is provided, to which the sum signal can be supplied and whose output is connected to a further multiplier (90), whose second input is connected to the output of the one multiplier (84), and in that the output of the further multiplier (90) is connected to the input of an integration circuit (89) whose output (92) also forms the output of the control circuit.

**5.** Circuit arrangement according to Claim 4, characterised in that a bandpass filter (82, 86) is provided upstream of each amplitude limiter (83, 87).

**6.** Circuit arrangement according to Claim 5, characterised in that the amplitude demodulator (88), the bandpass filter (86) and the amplitude limiter (87) for the sum signal are provided jointly for a plurality of control circuits.

**Revendications**

**1.** Procédé de réception d'émetteur FM avec plusieurs antennes pour des véhicules automobiles, les signaux reçus par les différentes antennes étant mélangés à une porteuse reçue par le récepteur, procédé caractérisé en ce que :
  - a partir de chaque signal de mélange ($u_1$-$u_n$) on forme un signal de mélange ($u_1'$-$u_n'$) déphasé de 90°,
  - on pondère tous les signaux de mélange ($u_1$, $u_1'$ - $u_n$, $u_n'$) avec un coefficient ($w_i$) associé et on

6

additionne des signaux de mélange exploités pour former un signal de somme ($U_0$),

- on forme les coefficients associés en fonction de la valeur du signal de somme et de la position de phase du signal de mélange par rapport au signal de somme dans le sens d'une réduction au minimum des variations d'amplitude du signal de somme en fonction du temps, et

- pour dériver l'angle de phase entre les signaux de mélange respectifs et le signal de somme, on limite l'amplitude des signaux de mélange et du signal de somme.

2. Procédé selon la revendication 1, caractérisé en ce que, pour dériver l'angle de phase entre le signal de somme et le signal de mélange respectif, on limite la bande du signal de somme et du signal de mélange respectif avant de limiter l'amplitude.

3. Procédé selon la revendication 1 ou 2, caractérisé en ce qu'on forme la valeur du signal de somme par modulation d'amplitude.

4. Circuit pour la mise en oeuvre du procédé selon l'une des revendications précédentes, caractérisé en ce que :
   - un oscillateur commandé (71) est prévu et un mélangeur (31-3n) pour chaque antenne (11)-1n),
   - les sorties du mélangeur (31-3n) sont reliées chaque fois par l'intermédiaire d'un premier multiplicateur (41-4n) ainsi que par un élément de rotation de phase (51-5n) et un second multiplicateur (61-6n) aux entrées d'un circuit additionneur (70),
   - pour chaque signal de mélange dont la phase correspond à la position initiale et pour chaque signal de mélange déphasé de 90°, on a un circuit de régulation (93, 94, 95, 96) dont les entrées reçoivent le signal de sortie du circuit additionneur (70) ainsi que le signal de mélange respectif,
   - dans chaque circuit de régulation, il est prévu un limiteur d'amplitude (83, 87) pour le signal de somme et le signal de mélange,
   - les sorties du limiteur d'amplitude (83, 87) sont reliées aux entrées d'un multiplicateur (84),
   - il est prévu, en outre, un modulateur d'amplitude (88) qui reçoit le signal de somme et dont la sortie est reliée à un autre multiplicateur (90) dont la seconde entrée est reliée à la sortie du premier multiplicateur (84),
   - la sortie de l'autre multiplicateur (90) est reliée à l'entrée d'un circuit intégrateur (89) dont la sortie (92) forme la sortie du circuit de régulation.

5. Circuit selon la revendication 4, caractérisé par un filtre passe-bande (82, 86) en amont de chaque limitateur d'amplitude (83, 87).

6. Circuit selon la revendication 5, caractérisé en ce que les modulateurs d'amplitude (88) et le filtre passe-bande (86) ainsi que le limiteur d'amplitude (87) du signal de somme sont prévus en commun pour plusieurs circuits de régulation.

Fig. 1

Fig. 2

Fig. 3

—100

—101

103—

—104

—102

Fig. 4

Echo 1 ( $\Delta t_1 = 45\,\mu s$ )

Echo 2
( $\Delta t_2 = 31\,\mu s$ )

direkte Welle

Fig. 5

Echo 3 ( $\Delta t_3 = 73\,\mu s$ )

Fig. 6

Fig. 7

Fig. 8

Fig. 9

a)

b)

c)

d)

Fig. 10